# EUROPEAN PATENT SPECIFICATION

(11) **EP 3 013 623 B1**
(45) Date of publication and mention of the grant of the patent: **06.06.2018**
(21) Application number: 14745231.2
(22) Date of filing: 24.06.2014
(51) Int. Cl.: B60L 5/18, B60M 7/00, B60L 5/24, B60L 11/18, B60L 5/38, B60L 5/42

(54) **VEHICLE CHARGING CONNECTORS**
LADEVERBINDER FÜR EIN FAHRZEUG
CONNECTEURS DE CHARGE DE VÉHICULE

(30) Priority: 25.06.2013 GB 201311246
(43) Date of publication of application: 04.05.2016
(60) Divisional application: 16184146.5
(73) Proprietor: Furrer + Frey AG, 3005 Bern (CH)
(72) Inventor: BEDELL, Roger, E-18190 Granada (ES)
(74) Representative: Games, Robert Harland
(86) International application number: PCT/IB2014/001166
(87) International publication number: WO 2014/207537

(56) References cited:
- EP-A1- 1 997 668
- WO-A1-00/66388
- WO-A2-2011/079215
- GB-A- 1 480 311
- GB-A- 2 475 703
- US-A1- 2011 256 737
- Volvo buses: "Volvo Buses Plug-in Hybrids hit the streets of Gothenburg", , 13 May 2013 (2013-05-13), XP054975869, Retrieved from the Internet: URL:https://www.youtube.com/watch?v=aYq_bu zIy98 [retrieved on 2015-05-20]

## Description

The present invention relates to vehicle charging connectors.

### Background to the Invention

Electric vehicles, and in particular electric buses, are known. Electric buses offer the potential of urban public transport which is quieter and less polluting than buses powered by diesel engines, improving the air quality and level of noise in city centres. However, various practical problems have prevented widespread adoption of electric vehicle technology.

Some electric vehicles, such as trams, receive power directly from an electrical grid, for example by overhead lines. However, installing tram systems requires a great deal of initial investment, and once installed the route of a tram cannot easily be altered. Electric buses avoid these problems by storing power in batteries carried on the bus. These batteries must be regularly charged.

One method of charging batteries in an electric bus involves the use of an overhead charging gantry, having conductors which deliver power through receiving conductors mounted to the roof of the bus. One such arrangement is disclosed in GB2475703. In this arrangement, two movable pantographs are provided on the roof of the bus, one behind the other. The pantographs can be moved upwards from the bus to meet charging conductors on a charging gantry, to charge the batteries of the bus.

When charging a vehicle, it is known to provide a "pilot" connection for allowing communication between the charger and the vehicle being charged. The pilot connection is used to test, among other things, continuity of the charging conductors before charging begins.

Although the above-described charging arrangement is designed to allow for a certain amount of tolerance in the position of the vehicle, it is possible for the vehicle to be parked at the very edge of its tolerance. In this state, the charging conductors on the charger would be electrically connected to the receiving conductors on the vehicle, but the connection may not be sound enough to effect safe charging at high current. There may be only a small area of contact between a charging conductor and its respective charge receiving member when the vehicle is parked at the edge of its tolerance. However, this will not be apparent when performing a low-current test using a pilot connector. If charging begins when the connection is poor, there is a risk of overheating, damage to equipment, and possibly fire.

WO2011079215 discloses a charging arrangement with two side-by side elongate conductors running parallel to each other along the length of a bus roof, and two in-line elongate conductors which are lowered from a charging gantry.

US2011256737 discloses a similar arrangement, although in this case the elongate conductors are provided on the underside of a bus, with the in-line conductors being mounted to a floor to be driven over.

WO0066388 shows the reversed geometrical arrangement, with elongate conductors provided overhead and in-line conductors fixed to a bus.

GB1480311 discloses a connection arrangement for trolleybuses with means for keeping the connectors correctly positioned as the trolleybus moves. EP1997668 discloses a connection arrangement for electrical vehicles with a specific earth contact arrangement. A further problem with the charging arrangement of GB2475703 is that it relies on moving parts to engage and disengage the vehicle from the charging station. If the pantographs on the roof of the bus cannot be moved for some reason, for example, due to failure of a power supply, motor, or control electronics, then the bus cannot be moved out of the charging station without causing damage to components.

It is an object of the invention to reduce or substantially obviate the above-mentioned problems.

### Statement of Invention

A vehicle charging arrangement comprising first and second connectors, one connector being mountable to a vehicle and the other connector being mountable to a charging gantry,
the first connector comprising first and second elongate conductors, each of the first and second elongate conductors having an elongate electrical contact for forming an electrical connection with the second charging connector, each electrical contact having a proximal end close to the other conductor and a distal end further from the other conductor, the first and second elongate conductors being longitudinally spaced and disposed parallel or in-line with each other, the first connector with the first and second elongate conductors being movable relative to the vehicle for connecting to the second connector,
the electrical contact of the second elongate conductor having a longitudinal extent which is shorter than a longitudinal extent of the electrical contact of the first elongate conductor, and
the second connector comprising third and fourth elongate conductors, each of the third and fourth elongate conductors having an elongate electrical contact for forming an electrical connection with the first charging connector, the third and fourth elongate conductors having longitudinal axes running parallel with each other, and the third and fourth elongate conductors being spaced from each other in a direction perpendicular to their longitudinal axes,
the spacing between the electrical contacts of the third and fourth elongate conductors being greater than the distance between the distal end of the electrical contact of the second elongate conductor and the proximal end of the electrical contact of the first elongate conductor, and being shorter than the distance between the proximal end of the electrical contact of the second elongate conductor and the distal end of the electrical contact of the first elongate conductor.

The spacing between the third and fourth elongate conductors may be greater than the distance between the distal end of the electrical contact of the second conductor and the proximal end of the electrical contact of the first conductor by a margin of at least 2.5cm, preferably at least 5cm. Likewise, the spacing between the third and fourth elongate conductors may be shorter than the distance between the proximal end of the electrical contact of the second elongate conductor and the distal end of the electrical contact of the first elongate conductor by a margin of at least 2.5cm, preferably 5cm.

In use, the first elongate conductor of the first connector may electrically connect with the third elongate conductor of the second connector, and the second elongate conductor of the first connector may electrically connect with the fourth elongate conductor of the second connector.

The position and shorter extent of the second elongate conductor ensures that a connection will only be made by the second elongate conductor when a strong and stable connection is made by the first elongate conductor. If the first elongate conductor is positioned such that it is only in contact with the third elongate conductor at its very edge, then the second elongate conductor will not electrically connect with the fourth elongate conductor at all. An electrical connection can only be made between the second and fourth elongate conductors when the first vehicle charging connector is positioned with respect to the second vehicle charging connector such that the first elongate conductor is in contact with the third elongate conductor at a point inward of either end of the first elongate conductor. In this position, a maximum contact area will be realised between the first and third elongate conductors, ensuring maximum conductivity. This position, inward of the ends, also ensures a degree of tolerance to any movement of the connector during the charging process.

The first elongate conductor may be adapted to provide a high power connection with the third elongate conductor, and the second elongate conductor may be adapted to provide a low power connection with the fourth elongate conductor. For example, the first and third elongate conductors may provide a connection for power transfer to charge batteries, whilst the second and fourth elongate conductors may provide an earth or pilot connection.

The first connector may be mountable to a vehicle and the second connector may be mountable to a charging gantry. Alternatively the first connector may be mountable to a charging gantry and the second connector may be mountable to a vehicle. Either way, the elongate conductors of the first connector are preferably substantially perpendicular to a longitudinal axis of the vehicle, and the conductors of the second connector are preferably substantially parallel to the longitudinal axis of the vehicle, when the charging arrangement is in use and the vehicle is receiving a charge.

In this way, the charging arrangement provides a reasonable degree of forward-backward and sideways tolerance, so that a driver can park a vehicle under a charging gantry and initiate charging quickly. When the second and fourth elongate conductors (possibly a pilot connection) are connected, the first elongate conductor is guaranteed to be mated with the third elongate conductor inward of its edge, so that a good stable connection is formed.

The charging gantry may be an overhead charging gantry and one of the connectors may be mounted to a vehicle roof.

Most preferably the first connector is mounted to a vehicle roof and the second connector is mounted to a charging gantry. This arrangement is preferable, since the first connector can be readily embodied in a lightweight form, to increase the operating efficiency of the vehicle.

The first vehicle connector may further comprise fifth and sixth elongate conductors,
each of the fifth and sixth elongate conductors having an electrical contact with a proximal end close to the other of the fifth and sixth conductors and a distal end further from the other of the fifth and sixth conductors,
the electrical contact of the sixth elongate conductor having a longitudinal extent which is shorter than a longitudinal extent of the electrical contact of the fifth elongate conductor,
the fifth and sixth elongate conductors running parallel with the first and second elongate conductors, and
the second connector further comprising seventh and eighth elongate conductors, the seventh and eighth elongate conductors having longitudinal axes running parallel with each other,
the seventh and eighth elongate conductors being spaced from each other in a direction perpendicular to the longitudinal axes of the seventh and eighth elongate conductors,
the spacing between the seventh and eighth elongate conductors being greater than the distance between the distal end of the electrical contact of the sixth conductor and the proximal end of the electrical contact of the fifth conductor, and being shorter than the distance between the proximal end of the electrical contact of the sixth elongate conductor and the distal end of the electrical contact of the fifth elongate conductor.

In other words, the arrangement of first, second, third and fourth elongate conductors may be repeated to make a total of four elongate conductors on each of two connectors. The arrangement may be repeated with the duplicate arrangements one behind the other. The appropriate arrangement in a given scenario will depend on the dimensions of the vehicle and space available on the roof, any restrictions on the charging gantry in terms of height and size, and so on.

The first and third elongate conductors may be used to provide a positive charging connection; the second and fourth elongate conductors may be used to provide a pilot connection; the fifth and seventh elongate conductors may be used to provide a negative charging connection; and the sixth and eighth elongate conductors may be used to provide a ground connection.

When continuity is successfully detected between the pilot and ground connections, good positive and negative charging connections can be guaranteed.

The first and second elongate conductors may be disposed along the same line as each other. Where provided, the fifth and sixth elongate conductors may also be disposed along the same line as each other. An insulator may be provided between the first and second elongate conductors, and an insulator may be provided between the fifth and sixth elongate conductors. In this way, the first and second elongate conductors with an insulator may form a continuous bar, and the fifth and sixth conductors with an insulator may for another continuous bar. However, it is also envisaged that, as an alternative, an air gap may be provided between the first and second conductors, and/or between the fifth and sixth conductors.

Either the vehicle-mounted connector or the gantry-mounted connector is movable, whichever of the first and second connectors is the vehicle-mounted connector. The other connector may be mounted to the vehicle or charging gantry in a fixed position. In use, whichever connector is movable may be moved to meet the connector which is fixed.
Most preferably, both of the first and second connectors are movable and, in use, move towards each other to meet each other. This has the advantage that, if either of the two moving mechanisms should fail for any reason, then the vehicle will not be trapped in the charging gantry, since it can come free by moving whichever moving mechanism is not broken or faulty.
At least one movably mountable connector may be movable substantially in an arc, on a pivoting arm, between a retracted position and an extended position.
The pivoting connector in the extended position may be biased towards the extended position, but pivotable towards the retracted position on application of a force to the connector. In this way, a vehicle can escape from a charging gantry even when the moving mechanism of the movable connector has failed, and the other connector is mounted in a fixed position or has also failed. In this situation, where the pivoting connector is fitted to the vehicle, the vehicle may be driven in a direction with the point where the pivoting arm is mounted to the vehicle being forward-most, and with the elongate conductors trailing behind. If the pivoting connector is part of the charging gantry, then the vehicle may be driven out of the gantry in a direction with the elongate conductors forward-most, and with the pivoting arm trailing behind.
The electrical contact of the second elongate conductor and, where provided, the sixth elongate conductor, may be vertically offset from the electrical contact of the first and fifth elongate conductors respectively.
The fourth and, where provided, the eighth elongate conductor may be biased towards a rest position, and may be movable out of the rest position in a direction perpendicular to the longitudinal axis of the fourth elongate conductor and also perpendicular to the spacing between the third and fourth elongate conductors.

A biased and movable fourth (and/or eighth) conductor ensures that the pilot and ground connections are made first, before the high power charging connections. This feature also ensures that a good connection can be made where the first and second conductors do not form a completely straight line, and/or when the fifth and sixth conductors do not form a completely straight line, possibly because some of the conductors have become damaged. Furthermore, the biased and movable conductor provides for a good connection with the charging gantry when the vehicle is parked on a sideways slope.

An electrical contact of the fourth elongate conductor may be shorter than an electrical contact of the third elongate conductor, and the electrical contacts of the third and fourth elongate conductors may be disposed side-by-side, both ends of the electrical contact of the fourth elongate conductor being located inwardly of the ends of the electrical contact of the third elongate conductor.

The electrical contacts of the third and fourth elongate conductors may have elongate extents substantially parallel with the third and fourth conductors themselves.

In the same way that the shorter electrical contact of the second conductor ensures a good connection of the first and third conductors at the sideways extreme of the parking tolerance of the charging arrangement, a shorter electrical contact of the fourth conductor ensures a good connection of the first and third conductors at the lengthways extreme of the parking tolerance of the charging arrangement.

Where an eighth elongate conductor is provided, an electrical contact of the eighth elongate conductor may likewise be shorter than an electrical contact of the seventh elongate conductor.

The fourth and, where provided, eighth elongate conductor may have a width perpendicular to its longitudinal axis and parallel with the spacing between the third and fourth elongate conductors which is smaller than a corresponding width of the third and, where provided, seventh elongate conductor.

The third elongate conductor may be separated from the seventh elongate conductor by a first insulator, and the fourth elongate conductor may be separated from the eighth elongate conductor by a second insulator. In this way, the second connector may comprise of a pair of parallel bars, one bar including the third elongate conductor, the first insulator and the seventh elongate conductor, and the other bar including the fourth elongate conductor, the second insulator and the eighth elongate conductor.

The second insulator may have a length parallel with the third, fourth, seventh and eighth elongate conductors which is longer than a corresponding length of the first insulator, thus providing for shorter fourth and eighth conductors with their ends inward of the third and seventh conductors as described above.

An outer surface of at least one of the first and second insulators may be set inwardly of outer surfaces of the third, fourth, seventh and eighth elongate conductors which mount the electrical contacts of the respective conductors. In this way, a contact surface of the second vehicle charging connector may have an inset insulating portion.

### Description of the Drawings

For a better understanding of the present invention, and to show more clearly how it may be carried into effect, reference will now be made, by way of example, to the accompanying drawings, in which:
Figure 1 shows a perspective view of a vehicle charging arrangement in use, charging a bus;
Figure 2 shows a plan view from above of the vehicle charging arrangement of Figure 1;
Figure 3 shows a perspective view from in front of the vehicle charging arrangement of Figure 1, with the vehicle disengaged from the charging gantry; and
Figure 4 shows a schematic plan view from above of charging conductors, forming part of the charging arrangement of Figure 1.

### Description of Preferred Embodiments

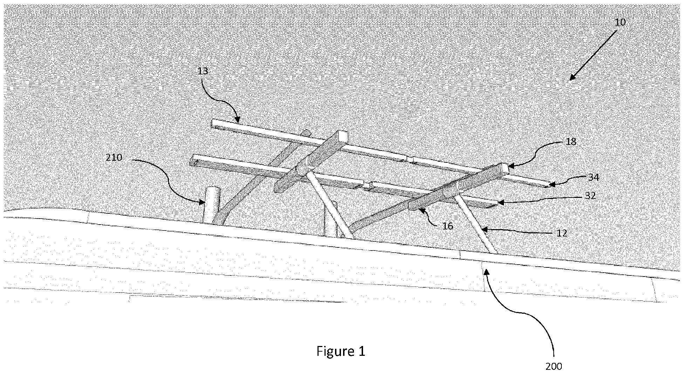

Referring firstly to Figure 1, a vehicle charging arrangement is generally indicated at 10. The vehicle charging arrangement includes a first connector 12, and a second connector 13. The first and second connectors 12, 13 include four elongate conductors each, that is, eight conductors in all. In this embodiment, the first connector 12 is mounted to the roof of a bus 200, and the second connector 13 is provided on an overhead charging gantry 210.

The first connector 12 includes first, second, fifth and sixth elongate conductors 16, 18, 20, 22. The first and second elongate conductors are disposed in the same line as each other, each extending from opposite sides of a insulated mount 24. Likewise, the fifth and sixth elongate conductors 20, 22 are disposed in the same line as each other, extending from opposite sides of another insulated mount 26.

The first and second elongate conductors 16, 18, together with their corresponding mount 24, form a substantially horizontal bar above the roof of the bus, and are pivotally mounted to the roof of the bus via a movable arm 28. The fifth and sixth elongate conductors 20, 22 and mount 26 are likewise mounted to the bus on movable arm 30.

Movable arms 28 and 30 can be operated to move first, second, fifth and sixth elongate conductors 16, 18, 20, 22 between an extended position, as shown in Figure 1, and a retracted position in which the pivotal arms 28, 30 and the elongate conductors 16, 18, 20, 22 are all disposed in a substantially horizontal plane just above the roof of the bus 200. The arms 28, 30, may be moved for example by electric motors. However, when the arms 28, 30 are in the extended position, they can be pressed downwardly towards the retracted position on application of a force to the elongate conductors 16, 18, 20, 22 from above. The arms 28, 30 are biased into the extended position and will therefore spring back to the extended position when any force is removed.

When the arms 28, 30 are in the retracted position, they may be locked against the roof of the bus 200, preventing any movement by applying force directly to the conductors 16, 18, 20, 22. The arms 28, 30 can only be moved from the retracted position to the extended position, and can only be locked into the retracted position, by operating the electric motors or other movement means.

The second connector 13 comprises third, fourth, seventh and eighth elongate conductors 32, 34, 36, 38. As shown in the Figure, the first elongate conductor 16 connects with the third elongate conductor 32, the second elongate conductor 18 connects with the fourth elongate conductor 34, the fifth elongate conductor 20 connects with the seventh elongate conductor 35, and the sixth elongate conductor 22 connects with the eighth elongate conductor 38.

The first and third 16, 32 and the fifth and seventh 20, 26 elongate conductors provide high-power charging connections. The second and fourth 18, 34 and sixth and eighth 22, 38 elongate conductors provide low-power pilot and earth connections. As is clear from the Figure, the fourth and eighth elongate conductors 34, 38 are substantially thinner than the third and seventh elongate conductors 32, 36.

A first insulator 40 is provided between the third and seventh elongate conductors 32, 36, and a second insulator 42 is provided between the fourth and eighth elongate conductors 34, 38. The third elongate conductor 32, the first insulator 40 and the seventh elongate conductor 36 form a bar and the fourth elongate conductor 34, the second insulator 42 and the eighth elongate conductor 38 form another bar, the two bars running parallel to each other, and spaced by around 50cm from each other.

The first and second insulators 40, 42 are thinner than the conductors 32, 36, 34, 38 to which they are respectively connected. In this way, the insulators form waisted sections of the bars. In particular, a contact surface of the second vehicle connector 12 has inset insulating sections between the conducting parts. The contact surface faces the bus 200 in the Figure.

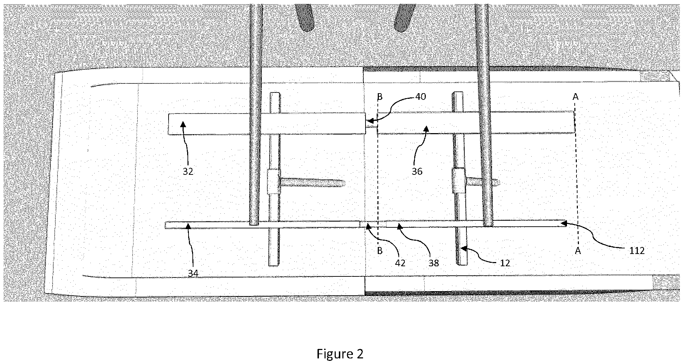

Referring now to Figure 2, the first connector 12 and second connector 13 are shown from above. In this Figure, the relative lengths and widths of the third, fourth, seventh and eighth elongate conductors 32, 34, 36, 38, and the first and second insulators 40, 42, are clearly visible. In particular, the eighth elongate conductor 38 has both ends inward of the ends of the seventh elongate conductor 36, as shown by lines AA and BB. The second insulator 42 is longer than the first insulator 40.

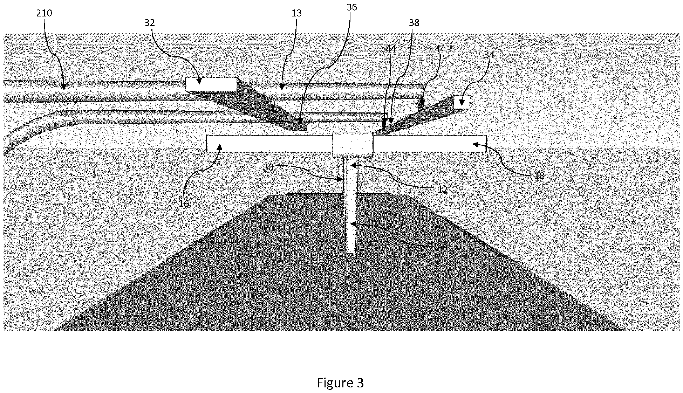

Referring now to Figure 3, the pivoting arms 28, 30 of the first connector 12 are shown in a partially extended position. The biasing arrangement of the second charging conductor 13 is also illustrated in this Figure. The fourth and eighth elongate conductors 34, 38 are mounted to the charging gantry 210 via springs, and are suspended on the springs a few centimetres below the level of the third and seventh elongate conductors 32, 36. When the first connector 12 is extended to meet the second connector 13, the second and sixth elongate conductors 18, 22 will push upwardly on the fourth and eighth elongate conductors 34, 38. As a result, the fourth and eighth elongate conductors 34, 38 will move against the springs 44. In this way, the vertical offset between the third and seventh elongate conductors 32, 36 and the fourth and eighth elongate conductors 34, 38 is automatically adjusted when the vehicle is engaged in the charging station. If the vehicle is parked on a flat surface and the conductors are undamaged then the fourth and eighth elongate conductors 34, 38 will be lifted to the same height as the third and seventh elongate conductors 32, 36 when charging is in progress.

The force required to move the fourth and eighth elongate conductors 34, 38 against the springs 44 is around 10 to 15 Newtons. The pivoting arms 28, 30 may push the second and sixth elongate conductors 18, (22) with a force of around 80 Newtons. Therefore, when charging, the first and second connectors 12, 13 will push against each other with a force of around 65 Newtons, which is sufficient to provide a good electrical connection.

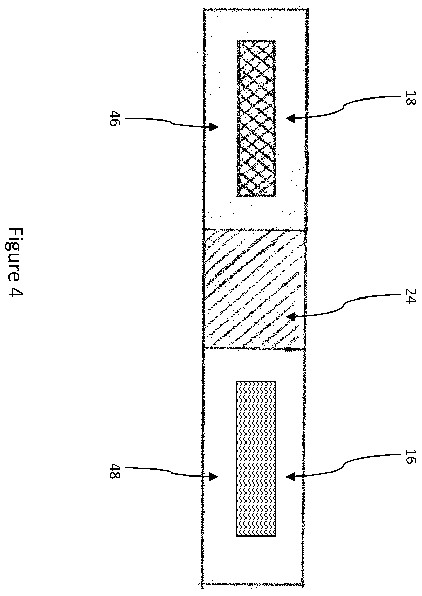

The arrangement of the first and second elongate conductors 16, 18 is best seen in Figure 4. The first and second elongate conductors 16, 18 extend from either side of a central insulating mount 24. The overall extent of the first and second conductors 16, 18 from the mount 24 is similar. However, the area of the actual electrical contact 46 which can form an electrical connection with the second charging connector 13 is substantially reduced on the second elongate conductor 18 relative to the first elongate conductor 16. The electrical contact of the first elongate conductor extends across substantially the entire length of the conductor 16. The electrical contact 46 of the second elongate conductor 18 has an overall shorter length than the electrical contact of the first elongate conductor 16.

The electrical contact 46 of the second elongate conductor 18, together with the spacing between the third and fourth conductors (32, 34) defines a working area 48 on the first elongate conductor 16. The working area 48 is inward of the ends of the first elongate conductor 16, ensuring a good stable connection to the first elongate conductor 16.

It will be appreciated that the arrangement of electrical contacts can be embodied in a number of different ways. For example, the electrical contact 46 of the second elongate conductor 18 may be formed as a raised area on a surface of the conductor, or as a conducting section surrounded by insulating material. Alternatively, the central mount 24 may be extended and the second elongate conductor 18 shortened, with the electrical contact 46 extending along the entire length of the second elongate conductor 18.

The embodiments described above are provided by way of example only, and various changes and modifications will be apparent to persons skilled in the art without departing from the scope of the present invention as defined by the appended claims.

## Claims

1. A vehicle charging arrangement (10) comprising first and second connectors (12, 13), one connector (12) being mountable to a vehicle (200) and the other connector (13) being mountable to a charging gantry (210),
the first connector (12) comprising first and second elongate conductors (16, 18), each of the first and second elongate conductors (16, 18) having an elongate electrical contact for forming an electrical connection with the second charging connector (13), each electrical contact having a proximal end close to the other conductor and a distal end further from the other conductor, the first and second elongate conductors (16, 18) being longitudinally spaced and disposed parallel or in-line with each other, the first connector (12) with the first and second elongate conductors (16, 18) being movable relative to the vehicle (200) for connecting to the second connector (13),
the electrical contact of the second elongate conductor (18) having a longitudinal extent which is shorter than a longitudinal extent of the electrical contact of the first elongate conductor (16), and
the second connector (13) comprising third and fourth elongate conductors (32, 34), each of the third and fourth elongate conductors (32, 34) having an elongate electrical contact for forming an electrical connection with the first charging connector (12), the third and fourth elongate conductors (32, 34) having longitudinal axes running parallel with each other, and the third and fourth elongate conductors (32, 34) being spaced from each other in a direction perpendicular to their longitudinal axes,
the spacing between the electrical contacts of the third and fourth elongate conductors (32, 34) being greater than the distance between the distal end of the electrical contact of the second elongate conductor (18) and the proximal end of the electrical contact of the first elongate conductor (16), and being shorter than the distance between the proximal end of the electrical contact of the second elongate conductor (18) and the distal end of the electrical contact of the first elongate conductor (16),
the first elongate conductor (16) being adapted to provide a high power connection with the third elongate conductor (32), and the second elongate conductor (18) being adapted to provide a low power connection with the fourth elongate conductor (34).

2. A vehicle charging arrangement as claimed in claim 1, in which the first connector (12) is mountable to a vehicle (200) and the second connector (13) is mountable to a charging gantry (210).

3. A vehicle charging arrangement (10) as claimed in claim 2, in which the first connector (12) is mounted to a vehicle (200) with the first and second elongate conductors (16, 18) running substantially perpendicular to a longitudinal axis of the vehicle (200).

4. A vehicle charging arrangement as claimed in claim 1, in which the first connector (12) is mountable to a charging gantry (210) and the second connector (13) is mountable to a vehicle (200).

5. A vehicle charging arrangement (10) as claimed in any of the preceding claims, in which the charging gantry (210) is an overhead charging gantry and one of the connectors (12) is mountable to a vehicle roof.

6. A vehicle charging arrangement (10) as claimed in any of the preceding claims, in which the first and second elongate conductors (16, 18) are disposed on the same line as each other.

7. A vehicle charging arrangement (10) as claimed in any of the preceding claims, in which an insulator or an air gap is provided between the first and second elongate conductors (16, 18).

8. A vehicle charging arrangement (10) as claimed in any of the preceding claims, in which one of the first and second connectors (12) is movably mountable to a vehicle (200).

9. A vehicle charging arrangement as claimed in any of the preceding claims, in which one of the first and second connectors (12, 13) is movably mountable to a charging gantry (210).

10. A vehicle charging arrangement (10) as claimed in claim 8 or claim 9, in which at least one movably mountable connector (12) is movable, on a pivoting arm, between a retracted position and an extended position.

11. A vehicle charging arrangement (10) as claimed in claim 10, in which the movably mountable connector (12) in the extended position is biased towards the extended position, but movable towards the retracted position on application of a force to the connector.

12. A vehicle charging arrangement (10) as claimed in any of the preceding claims, in which the electrical contact of the second elongate conductor (18) is vertically offset from the electrical contact of the first elongate conductor (16).

13. A vehicle charging arrangement (10) as claimed in any of the preceding claims, in which the fourth elongate conductor (34) is biased towards a rest position, and is movable out of the rest position in a direction perpendicular to the longitudinal axis of the fourth elongate conductor (34) and also perpendicular to the spacing between the third and fourth elongate conductors (32, 34), when a force is applied to the fourth elongate conductor (34).

14. A vehicle charging arrangement (10) as claimed in any of the preceding claims, in which the electrical contact of the fourth elongate conductor (34) is shorter than the electrical contact of the third elongate conductor (32), and in which the electrical contacts of the third and fourth elongate conductors (32, 34) are disposed side-by-side, both ends of the electrical contact of the fourth elongate conductor (34) being located inwardly of the ends of the electrical contact of the third elongate conductor (32).

15. A vehicle charging arrangement as claimed in any of the preceding claims, in which the fourth elongate conductor (34) has a width perpendicular to its longitudinal axis and parallel with the spacing between the third and fourth elongate conductors (32, 34) which is smaller than a corresponding width of the third elongate conductor (32).

## Patentansprüche

1. Fahrzeugladeanordnung (10), die einen ersten und zweiten Verbinder (12, 13) umfasst, wobei ein Verbinder (12) an ein Fahrzeug (200) montierbar ist und der andere Verbinder (13) an ein Ladeportal (210) montierbar ist,
der erste Verbinder (12) einen ersten und zweiten länglichen Leiter (16, 18) umfasst, wobei der erste und zweite längliche Leiter (16, 18) jeweils über einen länglichen elektrischen Kontakt zur Bildung einer elektrischen Verbindung mit dem zweiten Ladeverbinder (13) verfügen, wobei jeder elektrische Kontakt über ein proximales Ende nahe am anderen Leiter und ein distales Ende weiter entfernt vom anderen Leiter verfügt, der erste und zweite längliche Leiter (16, 18) in Längsrichtung im Abstand angeordnet und parallel oder linear zueinander angeordnet sind, der erste Verbinder (12) mit dem ersten und zweiten länglichen Leiter (16, 18) im Verhältnis zum Fahrzeug (200) zur Verbindung mit dem zweiten Verbinder (13) beweglich ist,
der elektrische Kontakt des zweiten länglichen Leiters (18) über eine Längserstreckung verfügt, die kürzer als die Längserstreckung des elektrischen Kontakts des ersten länglichen Leiters (16) ist, und
der zweite Verbinder (13) einen dritten und vierten länglichen Leiter (32, 34) umfasst, wobei der dritte und vierte längliche Leiter (32, 34) jeweils über einen länglichen elektrischen Kontakt zur Bildung einer elektrischen Verbindung mit dem ersten Ladeverbinder (12) verfügen, der dritte und vierte längliche Leiter (32, 34) über parallel zueinander verlaufende Längsachsen verfügen und der dritte und vierte längliche Leiter (32, 34) in senkrechter Richtung zu ihren Längsachsen im Abstand voneinander angeordnet sind,
wobei der Abstand zwischen den elektrischen Kontakten des dritten und vierten länglichen Leiters (32, 34) größer als die Entfernung zwischen dem distalen Ende des elektrischen Kontakts des zweiten länglichen Leiters (18) und dem proximalen Ende des elektrischen Kontakts des ersten länglichen Leiters (16) und kürzer als die Entfernung zwischen dem proximalen Ende des elektrischen Kontakts des zweiten länglichen Leiters (18) und dem distalen Ende des elektrischen Kontakts des ersten länglichen Leiters (16) ist,
wobei der erste längliche Leiter (16) angepasst ist, um eine Hochleistungsverbindung mit dem dritten länglichen Leiter (32) bereitzustellen, und der zweite längliche Leiter (18) angepasst ist, um eine Hochleistungsverbindung mit dem vierten länglichen Leiter (34) bereitzustellen.

2. Fahrzeugladeanordnung nach Anspruch 1, in der der erste Verbinder (12) an ein Fahrzeug (200) montierbar ist und der zweite Verbinder (13) an ein Ladeportal (210) montierbar ist.

3. Fahrzeugladeanordnung (10) nach Anspruch 2, in der der erste Verbinder (12) an ein Fahrzeug (200) montiert ist, wobei der erste und zweite längliche Leiter (16, 18) wesentlich senkrecht zu einer Längsachse des Fahrzeugs (200) verlaufen.

4. Fahrzeugladeanordnung nach Anspruch 1, in der der erste Verbinder (12) an ein Ladeportal (210) montierbar ist und der zweite Verbinder (13) an ein Fahrzeug (200) montierbar ist.

5. Fahrzeugladeanordnung (10) nach einem der vorstehenden Ansprüche, in der das Ladeportal (210) ein obenliegendes Ladeportal ist und einer der Verbinder (12) an ein Fahrzeugdach montierbar ist.

6. Fahrzeugladeanordnung (10) nach einem der vorstehenden Ansprüche, in der der erste und zweite längliche Leiter (16, 18) auf der gleichen Linie wie der jeweils andere Leiter angeordnet sind.

7. Fahrzeugladeanordnung (10) nach einem der vorstehenden Ansprüche, in der zwischen dem ersten und zweiten länglichen Leiter (16, 18) ein Isolator oder ein Luftspalt bereitgestellt ist.

8. Fahrzeugladeanordnung (10) nach einem der vorstehenden Ansprüche, in der einer des ersten und zweiten Verbinders (12) beweglich montierbar an ein Fahrzeug (200) ist.

9. Fahrzeugladeanordnung nach einem der vorstehenden Ansprüche, in der einer des ersten und zweiten Verbinders (12, 13) beweglich montierbar an ein Ladeportal (210) ist.

10. Fahrzeugladeanordnung (10) nach Anspruch 8 oder Anspruch 9, in der mindestens ein beweglich montierbarer Verbinder (12) auf einem Schwenkarm zwischen einer eingefahrenen Position und einer ausgefahrenen Position beweglich ist.

11. Fahrzeugladeanordnung (10) nach Anspruch 10, in der der beweglich montierbare Verbinder (12) in der ausgefahrenen Position in Richtung der ausgefahrenen Position gespannt, jedoch in Richtung der eingefahrenen Position bei Anwendung von Kraft auf den Verbinder beweglich ist.

12. Fahrzeugladeanordnung (10) nach einem der vorstehenden Ansprüche, in der der elektrische Kontakt des zweiten länglichen Leiters (18) vom elektrischen Kontakt des ersten länglichen Leiters (16) vertikal versetzt ist.

13. Fahrzeugladeanordnung (10) nach einem der vorstehenden Ansprüche, in der der vierte längliche Leiter (34) in Richtung einer Ruheposition gespannt und aus der Ruheposition in senkrechter Richtung zur Längsachse des vierten länglichen Leiters (34) und ebenfalls senkrecht zum Abstand zwischen dem dritten und vierten länglichen Leiter (32, 34) beweglich ist, wenn Kraft auf den vierten länglichen Leiter (34) angewandt wird.

14. Fahrzeugladeanordnung (10) nach einem der vorstehenden Ansprüche, in der der elektrische Kontakt des vierten länglichen Leiters (34) kürzer als der elektrische Kontakt des dritten länglichen Leiters (32) ist und in der die elektrischen Kontakte der dritten und vierten länglichen Leiter (32, 34) nebeneinander angeordnet sind, wobei sich beide Enden des elektrischen Kontakts des vierten länglichen Leiters (34) innerhalb der Enden des elektrischen Kontakts des dritten länglichen Leiters (32) befinden.

15. Fahrzeugladeanordnung nach einem der vorstehenden Ansprüche, in der der vierte längliche Leiter (34) senkrecht zu seiner Längsachse und parallel zu den Abständen zwischen dem dritten und vierten länglichen Leiter (32, 34) über eine Breite verfügt, die kleiner als die entsprechende Breite des dritten länglichen Leiters (32) ist.

## Revendications

1. Système de charge d'un véhicule (10) comprenant des premier et deuxième connecteurs (12, 13), un connecteur (12) pouvant être monté sur un véhicule (200), l'autre connecteur (13) pouvant être monté sur un portique de charge (210),
le premier connecteur (12) comprenant des premier et deuxième conducteurs allongés (16, 18), chacun des premier et deuxième conducteurs allongés (16, 18) possédant un contact électrique allongé pour former une connexion électrique avec le deuxième connecteur de charge (13), chaque contact électrique possédant une extrémité proximale proche de l'autre conducteur et une extrémité distale éloignée de l'autre conducteur, les premier et deuxième conducteurs allongés (16, 18) étant espacés longitudinalement et disposés parallèlement entre eux, ou alignés l'un avec l'autre, le premier connecteur (12) avec les premier et deuxième conducteurs allongés (16, 18) pouvant être déplacés relativement au véhicule (200) pour son raccordement avec le deuxième connecteur (13),
l'extension longitudinale du contact électrique du deuxième conducteur allongé (18) étant plus courte qu'une extension longitudinale du contact électrique du premier conducteur allongé (16), et
le deuxième connecteur (13) comprenant des troisième et quatrième conducteurs allongés (32, 34), chacun des troisième et quatrième conducteurs allongés (32, 34) possédant un contact électrique allongé pour former une connexion électrique avec le premier connecteur de charge (12), les troisième et quatrième conducteurs allongés (32, 34) possédant des axes longitudinaux parallèles entre eux, et les troisième et quatrième conducteurs allongés (32, 34) étant espacés l'un de l'autre dans une direction perpendiculaire à leurs axes longitudinaux,
l'espacement entre les contacts électriques des troisième et quatrième conducteurs allongés (32, 34) étant supérieur à la distance entre l'extrémité distale du contact électrique du deuxième conducteur allongé (18) et l'extrémité proximale du contact électrique du premier conducteur allongé (16), et étant plus court que la distance entre l'extrémité proximale du contact électrique du deuxième conducteur allongé (18) et l'extrémité distale du contact électrique du premier conducteur allongé (16),
le premier conducteur allongé (16) étant adapté pour constituer une connexion haute puissance avec le troisième conducteur allongé (32), et le deuxième conducteur allongé (18) étant adapté pour constituer une connexion basse puissance avec le quatrième conducteur allongé (34).

2. Système de charge d'un véhicule (10) selon la revendication 1, dans lequel le premier connecteur (12) peut être monté sur un véhicule (200), et le deuxième connecteur (13) peut être monté sur un portique de charge (210).

3. Système de charge d'un véhicule (10) selon la revendication 2, dans lequel le premier connecteur (12) est monté sur un véhicule (200), les premier et deuxième conducteurs allongés (16, 18) s'étendant de façon substantiellement perpendiculaire à un axe longitudinal du véhicule (200).

4. Système de charge d'un véhicule selon la revendication 1, dans lequel le premier connecteur (12) peut être monté sur un portique de charge (210), et le deuxième connecteur (13) peut être monté sur un véhicule (200).

5. Système de charge d'un véhicule (10) selon une quelconque des revendications précédentes, dans lequel le portique de charge (210) est un portique de charge supérieur et un des connecteurs (12) peut être monté sur le toit d'un véhicule.

6. Système de charge d'un véhicule (10) selon une quelconque des revendications précédentes, dans lequel les premier et deuxième conducteurs allongés (16, 18) sont disposés un même axe.

7. Système de charge d'un véhicule (10) selon une quelconque des revendications précédentes, dans lequel un isolateur ou un entrefer est placé entre les premier et deuxième conducteurs allongés (16, 18).

8. Système de charge d'un véhicule (10) selon une quelconque des revendications précédentes, dans lequel un des premier et deuxième connecteurs (12) peut être monté de façon mobile sur un véhicule (200).

9. Système de charge d'un véhicule selon une quelconque des revendications précédentes, dans lequel un des premier et deuxième connecteurs (12, 13) peut être monté de façon mobile sur un portique de charge.

10. Système de charge d'un véhicule (10) selon la revendication 8 ou la revendication 9, dans lequel au moins un connecteur montable de façon mobile (12) peut être déplacé, sur un arbre de pivotement, entre une position rétractée et une position déployée.

11. Système de charge d'un véhicule (10) selon la revendication 10 dans lequel le connecteur montable de façon mobile (12) dans la position déployée est incliné vers la position déployée, mais peut être déplacé vers la position rétractée lors de l'application d'une force sur le connecteur.

12. Système de charge d'un véhicule (10) selon une quelconque des revendications précédentes, dans lequel le contact électrique du deuxième conducteur allongé (18) est décalé verticalement par rapport au contact électrique du premier conducteur allongé (16).

13. Système de charge d'un véhicule (10) selon une quelconque des revendications précédentes, dans lequel le quatrième conducteur allongé (34) est incliné vers une position de repos, et peut être déplacé hors de la position de repos dans une direction perpendiculaire à l'axe longitudinal du quatrième conducteur allongé (34), et également perpendiculaire à l'espacement entre les troisième et quatrième conducteurs allongés (32, 34) lors de l'application d'une force sur le quatrième conducteur allongé (34).

14. Système de charge d'un véhicule (10) selon une quelconque des revendications précédentes, dans lequel le contact électrique du quatrième conducteur allongé (34) est plus court que le contact électrique du troisième conducteur allongé (32), et dans lequel les contacts électriques des troisième et quatrième conducteurs allongés (32, 34) sont disposés côte à côte, les deux extrémités du contact électrique du quatrième conducteur allongé (34) étant situées vers l'intérieur des extrémités du contact électrique du troisième conducteur allongé (32).

15. Système de charge d'un véhicule selon une quelconque des revendications précédentes, dans lequel une largeur du quatrième conducteur allongé (34) est perpendiculaire à son axe longitudinal, et parallèle à l'espacement entre les troisième et quatrième conducteurs allongés (32, 34), et est inférieure à une largeur correspondante du troisième conducteur allongé (32).
